# EUROPEAN PATENT SPECIFICATION

(11) **EP 3 740 996 B1**
(45) Date of publication and mention of the grant of the patent: **22.10.2025**
(21) Application number: 19738410.0
(22) Date of filing: 14.01.2019
(51) Int. Cl.: H01M 10/39, H01M 10/0562, C03C 3/16, C03C 4/14, H01M 10/054, C03C 3/32

(54) **SOLID ELECTROLYTE FOR SODIUM BATTERIES**
FESTELEKTROLYT FÜR NATRIUMBATTERIEN
ÉLECTROLYTE SOLIDE POUR BATTERIES AU SODIUM

(30) Priority: 12.01.2018 US 201862616854 P
(43) Date of publication of application: 25.11.2020
(73) Proprietor: University of Houston System, Houston, Texas 77004 (US); Iowa State University Research Foundation, Inc., Ames, IA 50010 (US)
(72) Inventor: YAO, Yan, Pearland, Texas 77584 (US); CHI, Xiaowei, Houston, TX 77054 (US); MARTIN W. Steve, Ames 50010 (US); KMIEC J. Steven, Ames 50010 (US)
(74) Representative: HGF
(86) International application number: PCT/US2019/013465
(87) International publication number: WO 2019/140368

(56) References cited:
- WO-A1-2017/102011
- CN-A- 105 609 871
- US-A1- 2007 048 617
- POMPETZKI M. ET AL: "Natriumtrithiophosphat(V): Kristallstruktur und Natriumionenleitfähigkeit", ZEITSCHRIFT FUR ANORGANISCHE UND ALLGEMEINE CHEMIE, vol. 629, no. 11, 15 October 2003 (2003-10-15), pages 1929 - 1933, XP055857542, ISSN: 0044-2313, DOI: 10.1002/zaac.200300170
- HAYASHI ET AL.: "Development of glass solid electrolytes for all-solid- state sodium batteries", RESEARCH PROJECT, 12 June 2017 (2017-06-12), pages 1 - 6, XP055624616, Retrieved from the Internet <URL:https://kaken.nii.ac.jp/en/file/KAKENHI-PROJECT-26289243/26289243seika.pdf>
- JOYCE ET AL.: "Synthesis and Properties of Sodium Oxy-thio-Phosphate Glasses", 11 April 2017 (2017-04-11), Ames, Iowa , pages 1 - 13, XP055724787, Retrieved from the Internet <URL:https://lib.dr.iastate.edu/context/undergradresearch_symposium/article/1267/type/native/viewcontent>

## Description

### STATEMENT REGARDING FEDERALLY SPONSORED RESEARCH

This invention was made with government support under Grant No. DE-AR0000654 from Advanced Research Projects Agency-Energy (ARPA-E) within the U.S. Department of Energy. The government has certain rights in the invention.

### FIELD OF THE INVENTION

The present invention relates to a solid electrolyte for a sodium battery with microstructure approaching a continuous glass and excellent chemical stability with sodium metal or sodium-based alloys and a method of producing the same electrolyte.

### BACKGROUND OF INVENTION

In contrast to batteries using liquid electrolytes, solid-state batteries utilize non-flammable, mechanically stable solid-state electrolytes (SEs) that could offer all-solid state batteries with higher energy density, higher safety, and longer life span. Solid-state sodium batteries are promising for large-scale energy storage application due to lower cost than the lithium counterparts.

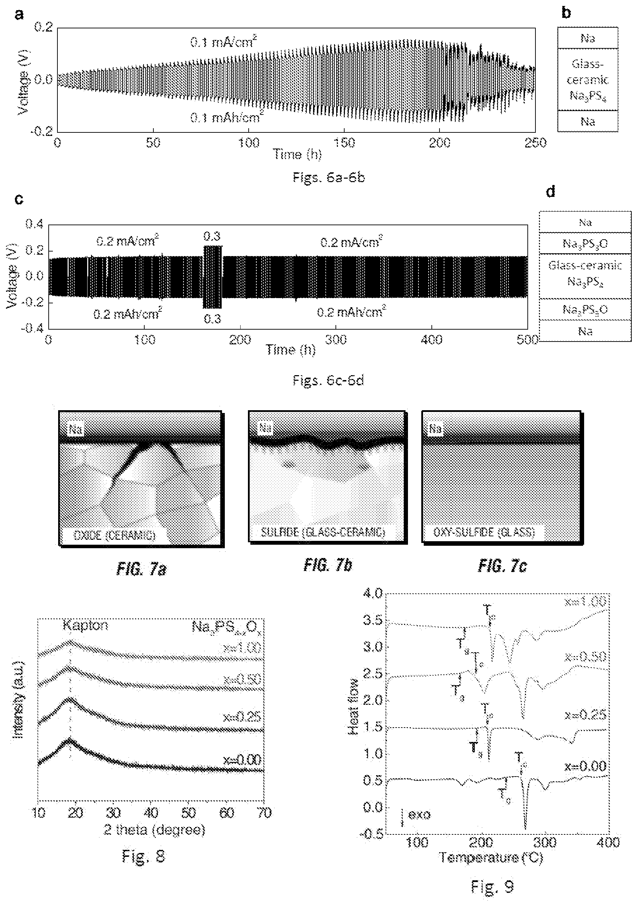

Solid-state sodium metal batteries (SSMBs) are very promising candidates for grid-scale energy storage applications. To date, however, there are no commercialized SSMBs mainly due to the lack of a high conductivity solid-state electrolyte that is stable with Na metal. So far, the only successful example of a commercialized Na metal battery for grid-scale energy storage involve NAS batteries (Wen et al., "Main Challenges for High Performance NAS Battery: Materials and Interfaces." Adv Funct Mater 23, 1005-1018 (2013)). Development of Na⁺-ion SEs mainly include two categories, oxide (*e.g. β*"-Al₂O₃ and NASICON-type ceramics) and sulfide (e.g. heat-treated Na₃PS₄, Na₃SbS₄) (Figs. 7a-7b). However, both share problems such as short circuiting and instability Na metal.

Ideal SEs require the combination of several key parameters: high ionic conductivity, chemical compatibility with anode and cathode, excellent mechanical and thermal stability, wide electrochemical window, simple synthesis and film forming process, easy device integration and low cost. Among various SEs, sulfide-based SEs attract significant attention not only due to high ionic conductivity, but also with superb film formability. Sulfide-based SE powders can be well densified even pressing at room temperature, and no sintering process is necessary in contrast to oxide-based SEs. Many high ionic conductivity sulfide-based SEs have been developed (US patent No. 9640835B2; Kim et al. Small Methods 2017, 1700219) including Na₃PS₄, cation-doped Na₃PS₄ (Na₃₊ₓP₁₋ₓMₓS₄, M=Si, Ge, Sn; Na₃P₁₋ₓMₓS₄, M=As), anion-doped Na₃PS₄ (Na₃PS₄₋ₓMₓ, M=Se; Na₃₋ₓPS₄₋ₓMₓ, M=Cl, Br), Na₃SbS₄ and Na₁₀SnP₂S₁₂. Some electrolytes show comparable conductivities with liquid electrolytes. As-doped Na₃PS₄ (Na₃P_{0.62}As_{0.38}S₄), Cl-doped Na₃PS₄ (Na_{2.9375}PS_{3.9375}Cl_{0.0625}) and Na₃SbS₄ show sodium-ion conductivities 1.46 × 10⁻³ S cm⁻¹, 1.38 × 10⁻³ S cm⁻¹, and 1.05 × 10⁻³ S cm⁻¹ at room temperature, respectively. M. Pompetzki et al., Z. Anorg. Allg. Chem., 2003, 629, 1929-1933 discloses oxygen doped Na₃POS₃ synthesized by freeze-drying. The crystal structure was determined using X-ray and neutron powder diffraction data and shown to have the orthorhombic space group, Cmc2₁. The authors suggested that Na₃POS₃ could be considered as a fast ionic conductor above 250 °C.

One of the key challenges of currently existing sulfide-based SEs is poor chemical stability with sodium metals or sodium-based alloys. Therefore, sodium metals or sodium-based alloys are not suitable for use as anodes in solid-state batteries. Theoretical thermodynamic calculations demonstrate that most sulfide electrolytes have a narrow electrochemical window (Y. Zhu, et al. ACS Appl. Mater. Interfaces 2015, 7, 23685-23693; Y. Tian, et al., Energy Environ Sci. 2017, 10, 1150-1166.). The undesired reactions between Na metal and solid electrolyte has also been experimentally shown (Wenzel, et al., ACS Appl. Mater. Interfaces 2016, 8, 28216-28224).

In addition to the challenge of chemical instability, the other formidable challenge is short circuit events in all-solid-state metal batteries. Multiple research groups have reported cases where solid electrolytes paired with a Li or Na metal anode experience a short circuit event. A recent study shows the failure mechanism is Griffith-like, and solid state electrolyte without crack, grain boundary or defect on its surface will be ideal electrolyte to suppress short circuit event *(*Adv. Energy Mater. 2017, 1701003). A solid-state electrolyte that forms a highly dense layer with a microstructure approaching a continuous glass is therefore strongly desired.

In Tatsumisago et al. US patent No. 9537174B2, "Sulfide solid electrolyte", a oxysulfide electrolyte was reported with the chemical formula of yLi₂S-(100-x-y)P₂S₅-xP₂O₅, which is found to (1) show enhanced moisture stability, and (2) crystalline phase in nature.

Amorphous glass is typically processed through melt-quench method, which requires high temperature to melt the electrolyte and adds complexity to producing an electrolyte. Ideally, a glass-forming approach using powders compressed at room temperature is preferred due to low-cost synthetic approach.

Hayashi et al., "Development of glass solid electrolytes for all-solid- state sodium batteries", Research Project, 12 June 2017 (2017-06-12), pages 1-6, XP055624616 discloses the preparation of Na₃PS₄-based glass electrolytes with a partial cation (Si, Al, Sn) or anion (O) substitution. In particular, oxide glass electrolytes with the structure Na₃PS_{4-y}O_{y} were reported. The synthesis of Na₃PS_{4-y}O_{y} where y = 2 was carried out by milling P₂O₅, Na₂S and P₂S₅ followed by a subsequent heat treatment.

Joyce et al., "Synthesis and Properties of Sodium Oxy-thio-Phosphate Glasses", 11 April 2017 (2017-04-11), pages 1-13, XP055724787 discloses the synthesis of amorphous oxy-sulfide glass compound obtained via ball milling. P₂O₅, Na₂S and P₂S₅ are mixed were milled at the ratio 67Na₂S + 33[(x)P₂S₅ + (1-x) P₂O₅] at 450 rpm for 20 h (x = 0 to 1). All obtained materials were shown to be amorphous. The powders were pressed into compact pellets for measurement of the materials conductivity.

### SUMMARY OF INVENTION

In a first aspect of the invention there is provided a battery comprising:
at least one sodium metal or sodium-based alloy electrode;
a second electrode; and
a solid-state electrolyte, wherein the electrolyte comprises a sodium oxy-sulfide glass,
and wherein the sodium oxy-sulfide glass is Na₃PS₄₋ₓOₓ with 0<x≤1.

Another aspect of the invention provides a method for forming an electrolyte comprising:
ball-milling starting materials comprising at least one sodium sulfide material and at least one oxide material; and
pressing resulting ball-milled materials to form a sodium oxy-sulfide glass that is a solid-state electrolyte, wherein the sodium oxy-sulfide glass is Na₃PS₄₋ₓOₓ with 0<x≤1.

Methods, batteries, and electrolytes are discussed herein utilizing a solid-state electrolyte, such as a sodium oxy-sulfide. This new class of sodium-ion conducting solid-state electrolytes that forms a highly dense layer that approaches a continuous glass when powders are compressed at low temperatures, while maintaining a stable low-resistance interface with Na metal or Na-alloy electrodes, are discussed further herein.

For example, the electrolytes discussed herein may be mainly amorphous, and/or have a relative density of 95% or greater. These electrolytes may be utilize with a sodium battery with Na metal or Na-alloy electrode(s). Further, these electrolytes may operate 250 hours or longer with a Na metal or Na-based alloy electrode at 0.2 mA/cm². This new electrolyte is transformative in that it exhibits the benefits of a continuous glass formed by melt processes, but can be formed using low-cost and highly scalable powder slurry methods.

The method of forming the electrolyte utilizes ball-milling of starting materials comprising at least one sodium sulfide and at least one oxide. For example, ball-milling may be performed at 500 rpm or greater. The resulting materials are pressed at relatively low temperatures and pressure to form the electrolyte. In some cases, the materials may be pressed at temperatures of 100 °C or less and/or at 100-450 MPa.

This oxysulfide electrolyte has a nominal composition of Na₃PS₄₋ₓOₓ (0<x≤1), which can be synthesized by ball milling a mixture of Na₂S-P₂S₅-P₂O₅ with a molar ratio of 75:(25-y):y (0<y≤20). Examples of starting materials may comprise Na₂S, P₂S₅, and P₂O₅.

The foregoing has outlined rather broadly various features of the present disclosure in order that the detailed description that follows may be better understood. Additional features and advantages of the disclosure will be described hereinafter.

### BRIEF DESCRIPTION OF THE DRAWINGS

For a more complete understanding of the present disclosure, and the advantages thereof, reference is now made to the following descriptions to be taken in conjunction with the accompanying drawings describing specific embodiments of the disclosure, wherein:
FIGS. 1a-1d shows the cross-sectional SEM morphology comparison of (a, b) Na₃PS₄ glass pellet vs. (c,d) Na₃PS₃O glass pellet formed by cold pressing at 150 MPa and 375 MPa, respectively.
FIGS. 2a-2b show the conductivities of comparative examples-Na₃PS₄₋ₓOₓ (x=0, 0.25, 0.50 and 1.0) electrolytes (a) Arrhenius curves of conductivities at different temperatures; (b) activation energies and conductivities at 60 °C vs. x values in Na₃PS₄₋ₓOₓ.
FIG. 3 shows the Synchrotron X-ray diffraction patterns of Na₃PS₄ glass-ceramic electrolyte and Na₃PS₄₋ₓOₓ (x=0, 0.25, 0.50 and 1.0) electrolytes as well as the standard patterns of Na₂S.
FIG. 4 shows ³¹P NMR spectra of four Na₃PS₄₋ₓOₓ (x=0, 0.25, 0.50 and 1.0) electrolyte powders.
FIGS. 5a-5d show the cycling behavior of asymmetric cells with one Na₃Sn₂ electrode and one Na₁₅Sn₄ electrode with device architecture shown in the schematics. (a) Na₃PS₄ glass-ceramic electrolyte, (b) corresponding battery architecture, (c) Na₃PS_{3.75}O_{0.25}| Na₃PS₄ glass-ceramic| Na₃PS_{3.75}O_{0.25} stack tested at 60 °C, and (d) corresponding battery architecture. The testing was performed at 60°C.
FIGS. 6a-6d show cycling behavior of symmetric cells with Na metal electrode with device architecture shown in the schematics. (a) Na₃PS₄ glass-ceramic electrolyte, (b) corresponding battery architecture, (c) Na₃PS₃O| Na₃PS₄ glass-ceramic| Na₃PS₃O stack tested at 60 °C, and (d) corresponding battery architecture. The testing was performed at 60°C.
FIGS. 7a-7c show Na|SEs interface phenomena in different SEs. **a,** Oxide with distinctive grain boundaries that lead to Na dendrites penetration. **b,** Sulfide with unstable interfacial layer with Na metal. **c,** Newly designed oxysulfide glass with flawless structure and stable interfacial layer.
FIG. 8 shows lab-based X-ray diffraction (XRD) patterns of Na₃PS₄₋ₓOₓ (x=0, 0.25, 0.50, and 1.00) SEs.
FIG. 9 shows differential scanning calorimeter (DSC) curves of Na₃PS₄₋ₓOₓ (x=0, 0.25, 0.50, and 1.00) SEs. T_{g} and T_{c} represent the glass transition temperature and crystallization temperature, respectively.
FIGS. 10a-10f show structural characterizations of Na₃PS₄₋ₓOₓ (x=0.00, 0.25, 0.50, and 1.00) SEs. a, Synchrotron X-ray diffraction patterns. b, Raman spectra. c, ³¹P-NMR spectra. d, Structural units and their relative contents dependence on different x values. e, Fourier transform-infrared spectra (FTIR) spectra. f, X-ray photoelectron spectra (XPS).
FIG. 11 shows transmission electron microscope (TEM) image and selected area electron diffraction (SAED) patterns of Na₃PS_{3.75}O_{0.25} SE .
FIG. 12 shows Gaussian fitting results of PS4 mode in Raman spectra of Na₃PS₄₋ₓOₓ (x=0, 0.25, 0.50, and 1.00) SEs.
FIGS. 13a-13d show mechanical properties of Na₃PS₄₋ₓOₓ (x=0.00, 0.25, 0.50, and 1.00) glass SEs and HT-Na₃PS₄ glass ceramic SE. a, SEM images of the surface (first row) and cross-section (second row) morphology, scale bar 10 µm. b, Relative density vs. molding pressure plot. c, Nano-indentation loading curves. d, Bar chart for the Young's modulus and hardness.
FIG. 14 shows galvanostatic cycling of Na|*HT*-Na₃PS₄|Na symmetric cells (not according to the invention) at 60 °C under current density of 0.1 mA cm⁻² with a stripping/plating capacity of 0.1 mAh cm⁻²
FIGS. 15a-15f show SEM images of cross-sectional Na₃PS₄ SE pellets pressed at (a) 150 MPa and (b) 375 MPa compared with Na₃PS₃O SE pellets pressed at (c) 150 MPa and (d) 375 MPa. SEM images of as-synthesized (e) Na₃PS₄ powders and (f) Na₃PS₃O powders.
FIG. 16 shows nano-indentation loading curves of Na₃PS_{3.75}O_{0.25} and Na₃PS_{3.5}O_{0.5} glass SEs.
FIGS. 17a-17c show chemical stability of Na₃PS₄₋ₓOₓ (x=0.00, 0.25, 0.50, and 1.00) SEs towards Na metal at 60 °C. a, Electrochemical impedance spectra (EIS) evolution of freshly made and 5 h-standing Na|SE|Na symmetric cells. b,c, P 2p and S 2p XPS spectra of the interfaces between Na and SEs after 5 h of contact.
FIG. 18 shows total area specific resistance (ASR) change of Na₃PS₄₋ₓOₓ (x=0, 0.25, 0.50, and 1.00) SEs when contact with Na metal.
FIGS. 19a-19b show P 2p and S 2p orbitals XPS spectra of Na₃PS₄₋ₓOₓ (x=0, 0.25, 0.50, and 1.00) SEs.

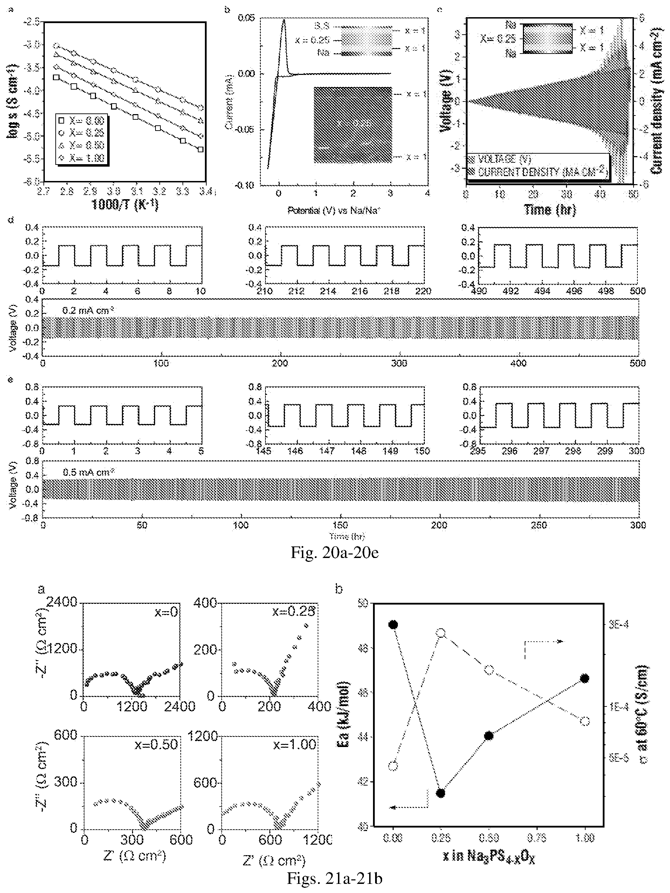

FIGS. 20a-20e show electrical and electrochemical properties of Na₃PS₄₋ₓOₓ (x=0.00, 0.25, 0.50, and 1.00) SEs. a, Temperature dependence of the Na⁺ ion conductivities of SEs. b, Cyclic voltammetry curve of Na₃PS₃O|Na₃PS_{3.75}O_{0.25}|Na₃PS₃O tri-layer electrolyte in Na|SE|Stainless Steel asymmetric cell. Insets show the schematic of the cell set-up and SEM image of the tri-layer electrolyte. c, Critical current density test of Na₃PS₃O|Na₃PS_{3.75}O_{0.25}|Na₃PS₃O tri-layer SE working in Na|SE|Na symmetric cells at 60 °C, step size of the current density increase is 0.05 mA cm⁻² and plating/stripping time is 0.5 h. Inset shows the schematic of the cell set-up. d,e, Galvanostatic cycling of Na|Na₃PS₃|Na₃PS_{3.75}O_{0.25}|Na₃PS₃O|Na symmetric cells at 60 °C under current densities of 0.2 mA cm⁻² and 0.5 mA cm⁻², respectively.
FIGS. 21a-21b show (a) Electrochemical impedance spectra (EIS) of Na₃PS₄₋ₓOₓ (x=0, 0.25, 0.50, and 1.00) SEs at 60 °C. (b) Plots of activation energies (Ea) and conductivities at 60 °C versus oxygen contents in Na₃PS₄₋ₓOₓ SEs.

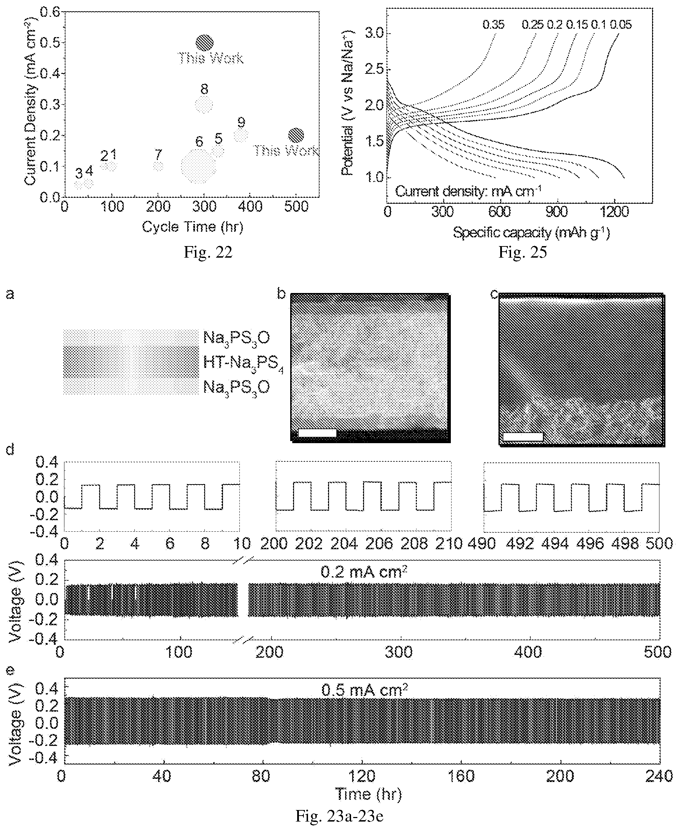

FIG. 22 shows a comparison of reported Na|SE|Na symmetric cell performance with our work. Different SEs: sulfide-based (e.g. points 1-3: Na₃PS₄, Na₃SbS₄, Na_{2.9375}PS_{3.9375}Cl_{0.0625}), oxide-based, (e.g. points 4-5: Na_{3.1}Zr_{1.95}Mg_{0.05}Si₂PO₁₂, heat-treated Na₃Zr₂(PO₄)(SiO₄)₂), boride-based (e.g. point 6: Na₂(B₁₂H₁₂)_{0.5}(B₁₀H₁₀)_{0.5}), polymer-based (e.g. points 7-8: poly(ethylene oxide) (PEO), hollow mesoporous organic polymer-PEO composite), and polymer-oxide composite (e.g. point 9: cross-linked poly(ethylene glycol) methyl ether acrylate (CPMEA)-Na₃Zr₂(PO₄)(SiO₄)₂) ones were covered. Furthermore, three key parameters: the capacity of Na metal plated per cycle (indicated by area of the circle), current density, cycling time, which determine the energy density, power density and cycling life performances of the practical full cell, were illustrated in the figure.
FIGS. 23a-23e show cycling performance of Na₃PS₃O|HT-Na₃PS₄|Na₃PS₃O symmetric cell: (a) Schematic of tri-layer electrolyte; (b) SEM image of the tri-layer electrolyte; (c) SEM image of enlarged interface between Na₃PS₃O (top layer) and HT-Na₃PS₄ (bottom layer); (d) and (e) galvanostatic cycling of Na|Na₃PS₃O|HT- Na₃PS₄|Na₃PS₃O|Na symmetric cells at 60 °C under current densities of 0.2 mA cm⁻² and 0.5 mA cm⁻², respectively.
FIGS. 24a-24c Na-S full cell (S-KB-Na₃PS_{3.75}O_{0.25}|Na₃PS_{3.75}O_{0.25}|Na₃PS₃O|Na) performances at 60 °C. a, Charge/discharge voltage profiles. b, Capacity and coulombic efficiency vs. cycle number. c, Rate capability and cycling stability under different current densities.
FIG. 25 shows voltage profiles of Na-S full cell (S-KB-Na₃PS_{3.75}O_{0.25}|Na₃PS_{3.75}O_{0.25}|Na₃PS₃O|Na) at 60 °C under current densities from 0.05 mA cm⁻² to 0.35 mA cm⁻².

### DETAILED DESCRIPTION

Refer now to the drawings wherein depicted elements are not necessarily shown to scale and wherein like or similar elements are designated by the same reference numeral through the several views.

Referring to the drawings in general, it will be understood that the illustrations are for the purpose of describing particular implementations of the disclosure and are not intended to be limiting thereto. While most of the terms used herein will be recognizable to those of ordinary skill in the art, it should be understood that when not explicitly defined, terms should be interpreted as adopting a meaning presently accepted by those of ordinary skill in the art.

It is to be understood that both the foregoing general description and the following detailed description are exemplary and explanatory only, and are not restrictive of the invention, as claimed. In this application, the use of the singular includes the plural, the word "a" or "an" means "at least one", and the use of "or" means "and/or", unless specifically stated otherwise. Furthermore, the use of the term "including", as well as other forms, such as "includes" and "included", is not limiting. Also, terms such as "element" or "component" encompass both elements or components comprising one unit and elements or components that comprise more than one unit unless specifically stated otherwise.

A solid electrolyte for sodium batteries and corresponding methods for making the solid electrolyte are discussed herein. This solid electrolyte may provide excellent chemical stability with sodium metal and/or may have a microstructure approaching a continuous glass. Further, the methods for making this solid electrolyte simplify the process of making the electrolyte.

This new class of electrolytes is different from others in following aspects: (1) the new electrolytes show enhanced chemical stability with Na metal or Na-based alloy electrodes, not with ambient moisture; and (2) the new electrolyte is mainly amorphous phase instead of crystallized glass phase.

A new family of solid-state electrolytes discussed herein are glassy SEs that combine the advantages of sulfide and oxide SEs to demonstrate the best cycling stability with sodium metal over all other known SEs and the distinctive ability to undergo a room-temperature pressure-induced sintering that creates a nearly fully flawless glassy structure that has robust mechanics and substantial chemical/electrochemical stability. Microstructural analysis reveals a significantly stronger and denser glassy network structure of oxysulfide SEs with more bridging oxygen units compared to the fully ionic and non-network structure of Na₃PS₄. In some embodiments, these SEs demonstrate very highest energy density (≥1800 Wh kg⁻¹).

In some embodiments, the new SEs involve oxysulfide SEs (Na₂S-P₂S₅-P₂O₅) existing as a nearly flawless glass using a facile one-step mechanochemical milling method. The ternary electrolyte system discussed further herein has been carefully designed involving the following: first, P₂S₅ with a low melting point is a strong glass former that appears to facilitate the formation of a structurally defect-free bulk glass, which is crucial to addressing the Na dendrites propagation issue in above pure oxide SEs; second, P₂O₅ with stronger chemical bonding of P-O compared to that of P-S can form more robust glass network, thereby boosting the mechanical strength and retarding the known electro-/chemical decomposition of pure sulfide SEs; third, Na₂S is an outstanding glass modifier to achieve high Na⁺-ion conductivity. During normal uniaxial cold-pressing, these new oxysulfide SEs were found to spontaneously transform into fully dense and microscopically homogeneous glasses (Fig. 7c). This structural transformation appears to be unique and essential to create the excellent mechanics (high Young's modulus of 20.9±0.7 GPa), chemical stability (inappreciable decomposition), and electrochemical cycling (high critical current density of 2.3 mA cm⁻² and hundreds of hours cycling at 0.5 mA cm⁻²) vs. Na metal. And an ambient-temperature all-solid-state Na-S battery with the state-of-the-art energy density (1819 Wh kg⁻¹) was successfully demonstrated using a tri-layer structure.

### Synthesis of Sodium Oxy-Sulfide Electrolytes

In some embodiments, solid-state electrolytes can be synthesized via a one-step ball-milling process. The resulting electrolyte is the sodium oxy-sulfide Na₃PS₄₋ₓOₓ glass where 0<x≤1. In some embodiments, desired amount of starting materials including at least one sulfide or sodium sulfide and at least one oxide (e.g. Na₂S, P₂S₅, and P₂O₅) with a desired molar ratio are place together in a container with milling balls, and the ball milling may be performed. Ball-milling may be performed at speeds of 500 rpm or greater.

As a nonlimiting example, Na₃PS₄₋ₓOₓ electrolytes with 0<x≤1 involve starting materials of Na₂S, P₂S₅, and P₂O₅ mixed with a molar ratio of 75:(25-y):y where y ≠ 0. Further, 0<y≤20 for the ratio in some cases. For example, a total mass of ~2 g were placed in a 250 mL stainless steel jar together with stainless steel balls (2×Φ16 mm/20×Φ10 mm or 2×Φ10 mm/20×Φ6 mm) and ball-milled at high rotation speed of 500 rpm for 3~10 hours.

After synthesis of the starting materials via one-step ball-milling, the resulting materials are further densified by pressing, such as by pressing at temperatures of 100 °C or less or at room temperature. Additionally, in some embodiments, the pressing may be performed under pressure of 100-450 MPa. In some embodiments, the pressing may be performed at pressures 350-450 MPa. In some embodiments, the pressing may be performed at pressures 250-350 MPa. In some embodiments, the pressing may be performed at pressures 150-250 MPa. In some embodiments, the pressing may be performed at pressures 100-150 MPa. In some embodiments, the pressed electrolyte may have relative densities close to 95% or greater. In some embodiments, the pressed electrolyte may have relative densities close to 100%. As a nonlimiting example, the Na₃PS₄₋ₓOₓ (x=1.0) glass electrolytes can be densified into pellets at room temperature under a pressure of 100-450 MPa. Notably, this densification results in samples with relative density close to 100%. Prior art of Na₃PS₄ glass electrolyte processed at the same condition results in ~94% relative density [M. Nose et al. J. Mater. Chem. A, 2015, 3, 22061]. In some embodiments, the resulting electrolyte may be mainly amorphous and/or nearly a continuous glass.

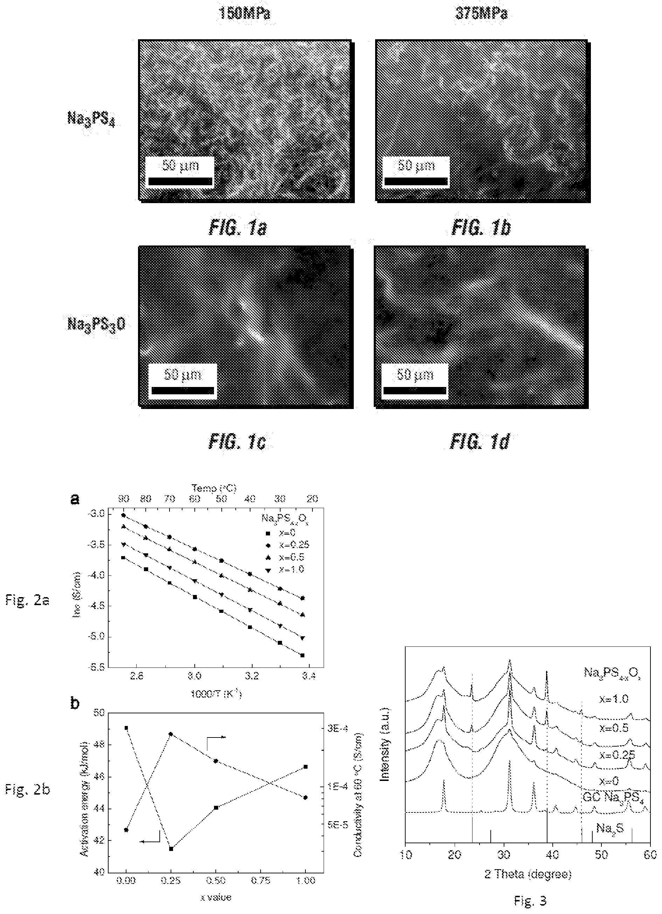

FIGs. 1a-1d show the comparison cross-sectional SEM images of fractured pellets of prior art Na₃PS₄ glass and oxy-sulfide glass Na₃PS₄₋ₓOₓ (x=1.0) cold-pressed at 150 and 375 MPa, respectively. Clearly the Na₃PS₄₋ₓOₓ glass shows characteristics consistent with a continuous glass (FIG. 1c and d) in stark contrast to pores and grain boundary observed in the Na₃PS₄ glass (FIG. 1a and b). Importantly, the Na₃PS₄₋ₓOₓ glass pressed at 150 MPa shows similar morphology as that formed at 375 MPa. For Na₃PS₄ glass, a minimum pressure of 375 MPa is required for a somewhat improved morphology; however, even at much larger pressure pores or cracks could still be observed. Without being bound by theory, it is believe that the origin of such difference in mechanical behavior and microstructure between the two materials lies on the chemical composition: oxygen doping in the oxy-sulfide glass Na₃PS₄₋ₓOₓ significantly changes the bond strength and viscoelastic behavior of glass. This new electrolyte is potentially transformative in that it exhibits the benefits of a continuous glass formed by melt processes, but can be formed using low-cost and highly scalable powder slurry method at low or room temperature. It is shown below that such a dense crack-free electrolyte is critical for stable Na metal cycling.

In some embodiments, the solid-state electrolyte is a product of ball-milling starting materials including at least one sodium sulfide material and at least one oxide material. As a nonlimiting example, Na₂S, P₂S₅ and P₂O₅ with the molar percentage of 75:(25-y):y, wherein 0<y≤20 may be utilized. The resulting electrolyte is Na₃PS₄₋ₓOₓ with 0<x≤1 in some cases. Further, x may be 0.25 for the Na₃PS₄₋ₓOₓ electrolytes. In some embodiments, the starting materials are subjected to a one-step ball-milling approach, such as in a stainless steel jar. Subsequently, the ball-milled materials may then be optionally cold-pressed, such as at room temperature or at temperatures of 100 °C or less, to produce the desired sodium oxy-sulfide solid-state electrolyte. In some embodiments, the solid-state electrolyte produced is mainly amorphous phase with a very small amount of highly-conductive crystalline phase (e.g. Na₃PS₄). It shall be understood herein that the electrolyte may be referred to as being mainly amorphous when a small amount of crystalline phase is present, such as < 1%, or demonstrate properties as discussed further herein in the experimental examples. In some embodiments, the resulting electrolyte may be a nearly continuous glass. The nearly continuous glass may be nearly flawless with very few pores, grain boundaries, or flaws. For example, "pop-in" phenomenon may be absent from nearly flawless glasses or the nearly flawless glass may demonstrate one or more properties as discussed further herein in the experimental examples. In some embodiments, solid-state electrolytes, e.g. Na₃PS₄₋ₓOₓ with 0<x≤1 have higher ionic conductivity than pure sulfide glass (x=0). In some embodiments, the solid-state electrolytes discussed above can form very uniform and dense pellet approaching nearly flawless glass that may also be mainly amorphous when pressing the resulting ball-milled powders discussed above. The pressing may be performed at room temperature or temperatures lower than 100 °C. In some embodiments, the pressing may occur at room or low temperatures and/or at low pressures. In some embodiments, the pressing may be performed under pressure of 100-450 MPa. In some embodiments, the pressing may be performed at pressures 350-450 MPa. In some embodiments, the pressing may be performed at pressures 250-350 MPa. In some embodiments, the pressing may be performed at pressures 150-250 MPa. In some embodiments, the pressing may be performed at pressures 100-150 MPa. In some embodiments, the pressed electrolyte may have relative densities close to 95% or greater. In some embodiments, the pressed electrolyte may have relative densities close to 100 %.

The electrolyte is suitable for use with a Na metal or Na-based alloy (e.g. Sn, Sb, P, Si, Ge, Bi and etc.) anode. In some embodiments, any suitable Na metal or Na-based alloy (e.g. Sn, Sb, P, Si, Ge, Bi and etc.) cathode may be utilized. In contrast, other prior SSEs demonstrate poor long term stability and degrade in a short time. The electrolyte is Na₃PS₄₋ₓOₓ with 0<x≤1. Further, x may be 0.25 for the Na₃PS₄₋ₓOₓ electrolytes. In some embodiments, the resulting electrolyte may be mainly amorphous and/or nearly a continuous glass. In some embodiments, the electrolytes discussed above can perform 500 hours or longer with Na metal or Na-based alloy at 0.2 mA/cm². In some embodiments, the electrolytes discussed above can perform 400 hours or longer with Na metal or Na-based alloy at 0.2 mA/cm². In some embodiments, the electrolytes discussed above can perform 300 hours or longer with Na metal or Na-based alloy at 0.2 mA/cm². In some embodiments, the electrolytes discussed above can perform 250 hours or longer with Na metal or Na-based alloy at 0.2 mA/cm². In some embodiments, the solid-state electrolytes discussed above can also be combined with other sulfide electrolytes that are unstable with Na metal or Na-based alloy electrodes. In some embodiments, the new electrolytes discussed above and the other (unstable) sulfide electrolytes form a multiple-layer (e.g. tri-layer) electrolyte. The other sulfide electrolyte may be sandwiched between the new electrolytes in some multiple layer configurations to isolate it from the Na metal or Na-based alloy. In some embodiments, the multiple-layer electrolyte discussed above can also be matched with Na metal or Na-based alloy (e.g. Sn, Sb, P, Si, Ge, Bi and etc.) anode.

### Experimental Example

The following examples are included to demonstrate particular aspects of the present disclosure. It should be appreciated by those of ordinary skill in the art that the methods described in the examples that follow merely represent illustrative embodiments of the disclosure.

Na₃PS₄₋ₓOₓ electrolytes were produced according to the nonlimiting examples discussed previously. Among various oxysulfide electrolytes Na₃PS₄₋ₓOₓ, FIG. 2a shows the trend of ionic conductivity vs. oxygen doping. Ionic conductivity maximizes at x=0.25 and then decreases when x reaches 1.0. In one embodiment, the Na₃PS_{3.75}O_{0.25} shows ionic conductivity of 2.7 × 10⁻⁴ S cm⁻¹ at 60 °C, which is significant higher than that of Na₃PS₄ glass electrolyte (x=0, 4.4 × 10⁻⁵ S cm⁻¹) and is comparable to that of Na₃PS₄ glass-ceramic electrolyte (3.9 × 10⁻⁴ S cm⁻¹) at 60 °C. The activation energies obtained from the slope of the Arrhenius curves are shown in FIG. 2b.

Fig. 3 shows the synchrotron X-ray powder diffraction pattern for various oxysulfide electrolytes Na₃PS₄₋ₓOₓ. When x=0, the sample is purely amorphous, which is reflected in the broad peaks at 15~20° and 30~35°. When x=0.25, the sample shows a tiny amount of Na₃PS₄ crystalline phase. When x=0.5, the sample shows less crystalline Na₃PS₄ phase but increasing amount of unreacted Na₂S. When x=1.0, the sample shows even less Na₃PS₄ and further increase of unreacted Na₂S.

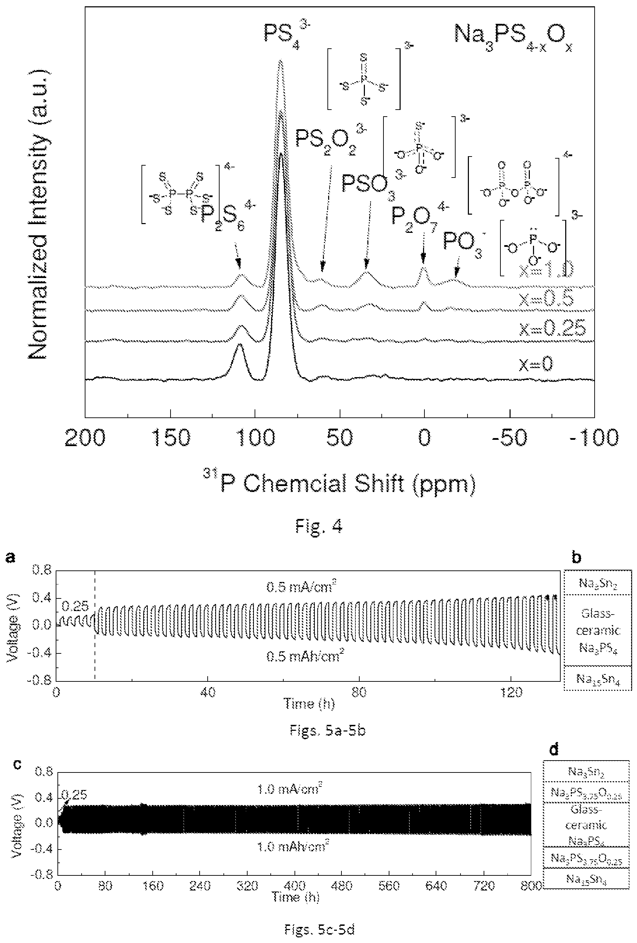

Solid-state nuclear magnetic resonance (NMR) has been shown as a powerful tool for determining Li local environment. To further understand the difference of materials composition, ³¹P NMR spectra of four Na₃PS₄₋ₓOₓ (x=0, 0.25, 0.50 and 1.0) samples was measured as shown in FIG. 4. For sample where x=0, the spectrum is mainly composed of two peaks at 110 and 85 ppm, corresponding to the structural units of P₂S₆⁴⁻ (110 ppm) and PS₄³⁻ (85 ppm). When x is 0.25, the relative intensity for P₂S₆⁴⁻ units is weaker. When x is increased to 0.5, four new resonance peaks at lower chemical shift were observed. The peak at around 60 ppm and 34 ppm can be assigned to PS₂O₂³⁻ and PSO₃³⁻ units, indicating oxygen atoms are incorporated into the P-S units, which is responsible for the improved chemical stability. The resonance peaks located at 0 and -18 ppm are ascribed to the P₂O₇⁴⁻ and PO₃⁻ units. When x = 1, the resonance peaks intensity for all four oxygen containing units (PS₂O₂³⁻, PSO₃³⁻, P₂O₇⁴⁻ and PO₃⁻) further increased. Typically speaking, the bond strength of P-O bond is much stronger than that of P-S bond due to the smaller size of O atom. Therefore, without being bound by theory, it is believed that higher energy is required to decompose the electrolyte which results in a superior chemical stability and mechanical property.

### Example 1: application of oxysulfide electrolytes with sodium-tin alloy anodes

NaSn alloy is typically believed to be less aggressive than Na metal in terms of chemical reactivity. FIGS. 5a-5d show the comparison of Na₃PS₄ glass-ceramic electrolyte and Na₃PS₄₋ₓOₓ oxysulfide electrolytes in an asymmetric cell format with one Na₃Sn₂ electrode and one Na₁₅Sn₄ electrode. When single layer Na₃PS₄ glass-ceramic electrolyte was used (FIG. 5a, and FIG. 5b showing corresponding battery architecture), a gradual increase in cycling voltage profile at 0.5 mA/cm² and 0.5 mAh/cm² capacity per half cycle after 133 hours of continuously cycling was observed, corresponding to the increase of aerial specific resistance (ASR) from 150 to 640 ohm/cm². This result highlighted the chemical instability of the Na₃PS₄ glass-ceramic electrolyte. In contrast, when Na₃PS_{3.75}O_{0.25} oxysulfide electrolyte was used with NaSn alloy as shown in FIG. 5c (corresponding battery architecture shown in FIG. 5d), a very stable voltage profile was observed, even at a higher current density (1.0 mA/cm² and 1.0 mAh/cm² capacity per half cycle) for 800 hours of continuously cycling, corresponding to the increase of ASR from 160 to 190 ohm/cm². In this case, the trilayer structure was fabricated due to the difficulty of fabricating thin single layer. It shall be understood by one of ordinary skill in the art that this trilayer structure is not necessary and a single layer of Na₃PS₄₋ₓOₓ oxysulfide electrolyte will show similar stable cycling with NaSn alloy.

### Example 2: application of oxysulfide electrolytes with Na metal anode

FIGS. 6a-6d show the comparison of Na₃PS₄ glass-ceramic electrolyte and Na₃PS₄₋ₓOₓ oxysulfide electrolytes in symmetric Na cells. Testing was performed at 60°C. FIG. 6a (FIG. 6b showing corresponding battery architecture) shows 240 hours cycling data of Na₃PS₄ glass-ceramic electrolyte at the current density of 0.1 mA/cm² and 0.1 mAh/cm² per half cycle. A gradual increase in voltage profile at 0.1 mA/cm² was observed, corresponding to the increase of ASR from 120 to 1150 ohm/cm² at the 200^{th} hour. Soft shorting was observed afterwards.

In stark contrast, as shown in FIG. 6c (FIG. 6d showing corresponding battery architecture), the Na metal stripping/plating voltage profile show almost no change in a Na₃PS_{3.75}O_{0.25}/ Na₃PS₄ glass-ceramic trilayer stack. A very stable voltage profile was observed, even at a higher current density at 0.5 mA/cm² and 0.5 mAh/cm² capacity per half cycle for 250 hours of continuously cycling, corresponding to the increase of ASR from 160 to 190 ohm/cm². For the same reason listed above, it is expected a single layer of Na₃PS₄₋ₓOₓ oxysulfide electrolyte will also show stable cycling with Na.

### Further Experimentation: Formation and Composition of Glassy SEs

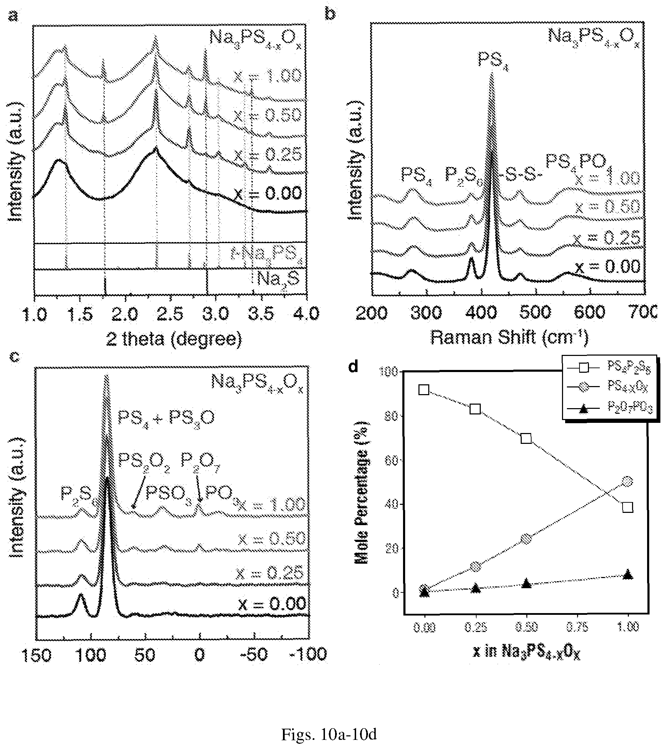

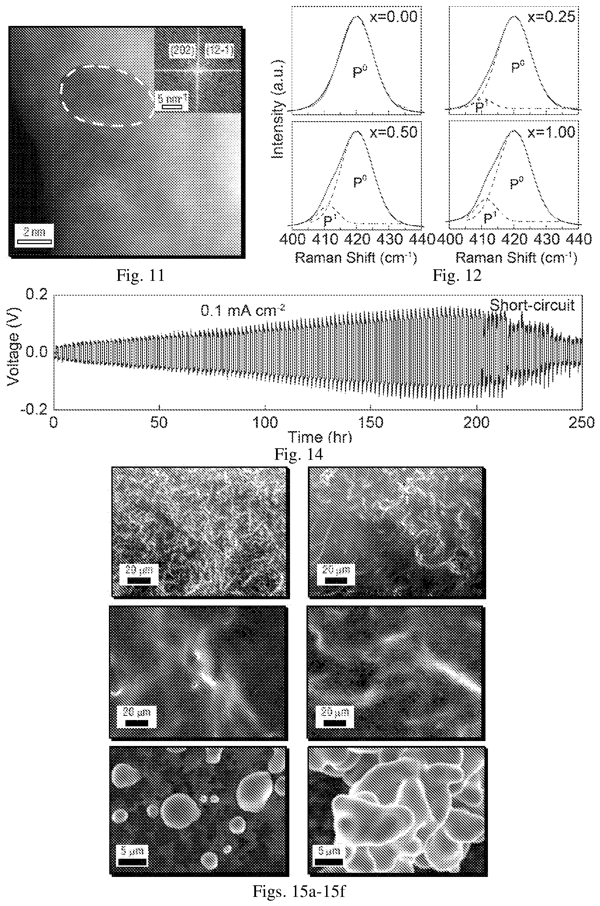

The synergistic effects of oxygen additions on the properties of the Na₂S-P₂S₅-P₂O₅ (Na₃PS₄₋ₓOₓ) SEs were examined and systematically characterized on different compositions of x = 0.00, 0.25, 0.50, 1.00 that were synthesized via the synthesis process for electrolytes discussed above, which may be referred to as herein as high-energy mechanochemical milling (MCM). The XRD patterns (Fig. 8) show that all the raw materials became amorphous after MCM, as no diffraction peaks of the starting materials were detected. The DSC curves (Fig. 9) further reveal the characteristic glass transition temperature of the SE products. It is generally agreed that MCM generates high local temperatures during the milling and rapid thermal quenching after the milling, which are responsible for the formation of amorphous materials. However, just as in melt-quenching systems, not always is the quenching rate sufficient to yield a fully amorphous glass and the presence of small amounts of crystalline phases can be detected in some systems (e.g. Na₂S-P₂S₅ and Li₂S-P₂S₅) synthesized via MCM method. To examine in more detail the possible crystalline phases in the Na₃PS₄₋ₓOₓ SEs, high-energy synchrotron XRD patterns were collected and shown in Fig. 10a. All synthesized SEs feature two broad halos superimposed with weak Bragg peaks, indicating a small number of fine-grained crystalline phases do form and is embedded in the majority of otherwise glassy matrix. As seen in Fig. 10a, when x reaches 1.0, these crystalline phases gradually disappear, instead, the Na₂S phases appear. The reason for the appearance Na₂S at the higher oxygen substitution was the disproportionation reaction (2Na₃PS₄ (P⁰) → Na₄P₂S₇ (P¹) + Na₂S) as confirmed from the Gaussian fitting of this main Raman peak centered at 420 cm⁻¹ (Fig. 10b). FIG. 11 shows transmission electron microscope (TEM) image and selected area electron diffraction (SAED) patterns of Na₃PS_{3.75}O_{0.25} SE. Detailed Raman spectra and the corresponding peak assignments are shown in Fig. 12 and Table 1. As indicated from both Fig. 10a and 10b, except for a small amount of crystalline phases, which is estimate to be in the range of < 1%, of Na₃PS₄ and Na₂S, the main composition of the Na₃PS₄₋ₓOₓ SEs is glassy phase. Thus, the electrolytes produced can be characterized as being mainly amorphous.

**Table 1 | Schematics of structural units and their peak positions in Raman and NMR spectra.**

| Schematic of structural units | Chemical formula | Raman peak position (cm⁻¹) | NMR peak position (cm⁻¹) |
|---|---|---|---|
| 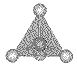 | PS₄ | 280, 420, 558 | 82 |
| 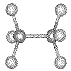 | P₂S₆ | 380 | 108 |
| 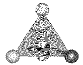 | PS₃O | - | ~80 |
| 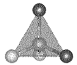 | PS₂O₂ | - | 63 |
| 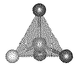 | PSO₃ | - | 32 |
| 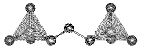 | P₂O₇ | - | 1 |
| 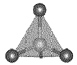 | PO₃ | - | -17 |
| 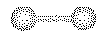 | -S-S- | 471 | - |

### Bridging oxygen in oxysulfide glassy SEs leads to strong glass network

P MAS-NMR was used to gain further insights into the glassy phase of these SEs by examining the local structure around the phosphorus glass forming cations. As seen from Fig. 10c and Table 1, with the incorporation of oxygen, four new peaks attributed to the formation of mixed oxysulfide (PS₂O₂ (63 ppm) and PSO₃ (32 ppm)) and oxide (P₂O₇ (1 ppm) and PO₃ (-17 ppm)) units can be clearly observed. The peak for the expected but missing PS₃O oxysulfide units is nearly indiscernible since it has essentially the same chemical shift as the PS₄ units. Following the methods developed herein, this unit as well as other units and their relative fraction was determined by careful spectral deconvolution and correction for charge balance. The composition (x) dependence on the population of the various structural units, reflecting the chemical short-range order of the glasses, are given in Fig. 10d, and show that as expected the fraction of mixed oxysulfide units dramatically increases with oxygen doping level and become the dominant species when x reaches 1.00. The appearance of PS₄₋ₓOₓ oxysulfide units further suggests that the oxygen has been incorporated into the PS₄ tetrahedra unit, which is expected to reinforce the glass network.

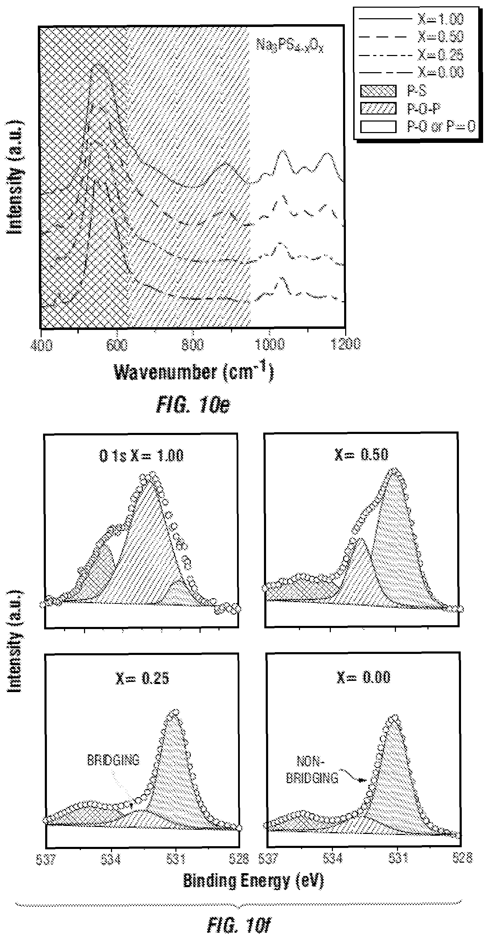

FTIR spectroscopy was further applied to explore the chemical bonding of P-S and P-O. The FTIR spectra shown in Fig. 10e can be divided into three sections corresponding to terminal sulfur P-S⁻ (400-630 cm⁻¹), bridging oxygen (BO) P-O-P (630-950 cm⁻¹) and terminal non-bridging oxygen (NBO) P-O⁻ or P=O (950-1200 cm⁻¹) modes, respectively. Detailed peak assignments are listed in Table 2. It is evident that oxygen incorporation into the glass matrix leads to a slightly increased fraction of NBO P-O⁻ and P=O bonds and a particularly significant increase in the fraction of BO P-O-P bonds, where the O atom is bridging between two P atoms. Further evidence of the formation of BOs upon adding oxygen to Na₃PS₄ can be found in O 1s XPS spectra (Fig. 10f), where the BO with the higher binding energy of 532.5 eV than that of NBO accounts for the higher fraction of the oxygen for larger x values in Na₃PS₄₋ₓOₓ SEs. Spectral deconvolution of the Na₃PS₃O composition, for example when x=1.00, shows that more than 90% of the added oxygen atoms are present as BOs in the glass. This behavior is completely consistent with our previous work on a similar Li₂GeS₄₋ₓOₓ glass system. Compared with the fully ionic and non-network structure of Na₃PS₄ pure sulfide, the formation of BOs units in the Na₃PS₃O oxysulfide eventually leads to a more interconnected glass structure that produces glasses with increasing packing densities, mechanical modulus, and bonding strength that improves the chemical stability of SEs.

**Table 2 | Assignments of the peaks in the Fourier-transform infrared (FTIR) spectra of Na₃PS₄₋ₓOₓ (x=0.00, 0.25, 0.50, and 1.00) SEs**

| **Position (cm⁻¹)** | **Assignment** |
|---|---|
| 445 | Vibration of P-S |
| 560 | Asymmetric stretching of P-S |
| 634 | Bending vibration of O-P-O bridging oxygen |
| 685 | Symmetric stretching of P-O-P bridging oxygen |
| 720 | Symmetric stretching of P-O-P bridging oxygen |
| 895 | Asymmetric stretching of P-O-P bridging oxygen |
| 996 | Symmetric stretching of ⁻O-P-O⁻ non-bridging oxygen |
| 1030 | Motion of the P=O or P-O⁻ non-bridging oxygen |
| 1090 | Symmetric stretching of ⁻O-P-O⁻ non-bridging oxygen |
| 1150 | Symmetric stretching of ⁻O-P-O⁻ non-bridging oxygen |

| | |
|---|---|
| Note: P-O bond is also observed in x=0 SE, which may result from the oxygen contamination during synthesis. | |

### Flawless Glasses with Improved Mechanical Properties

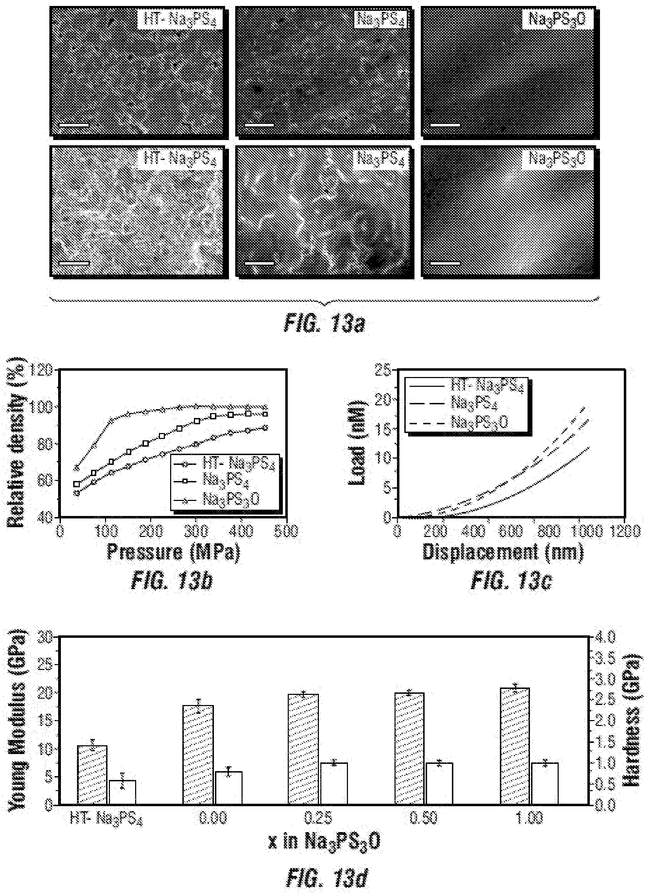

A nearly defect-free and mechanically robust SE is a prerequisite for effectively suppressing dendrite penetration. Consequently, the morphological structure and mechanical properties of Na₃PS₄₋ₓOₓ SEs were then investigated. For comparison, the widely studied heat-treated (HT-Na₃PS₄) glass-ceramic SE was also studied. Obvious pores and grain boundaries that are the typical Griffith flaws are clearly observed in the surface and cross-sectional SEM images of pelletized HT-Na₃PS₄ (Fig. 13a). These Griffith flaws are believed to induce dendrite penetration and eventually create short-circuiting through the SE in Na metal battery, as demonstrated in Fig. 14. Na₃PS₄ glass SE (x = 0) (not according to the invention) shows fewer defects compared to HT-Na₃PS₄ in Fig. 13a, in sharp contrast to both of these, the oxygen doped Na₃PS₃O glass SE (x = 1) appears to be absent of flaws from the surface through to the interior. This flawless and fully dense morphology is observed here for the first time in any SE fabricated by simple cold-pressing at room temperature and even by complex hot-pressing at ~200 °C. Such a perfect morphology is presumably closely related to the outstanding formability of Na₃PS₃O. As shown in Fig. 13b and Figs. 15a-15f, this SE is nearly fully densified even at a low pressure of 150 MPa. In comparison, high relative densities of Na₃PS₄ glass and HT-Na₃PS₄ are not readily achievable even though much higher pressures were applied during cold-pressing. The excellent formability of these oxysulfide SEs is attributed to the glass network with abundant BO units. Overall, for oxysulfide SEs, their unique formability and defect-free structure will undoubtedly enhance their mechanical strengths and reduce the likelihood of dendrite-induced short circuit when using Na metal anode, as shown in Fig. 7a.

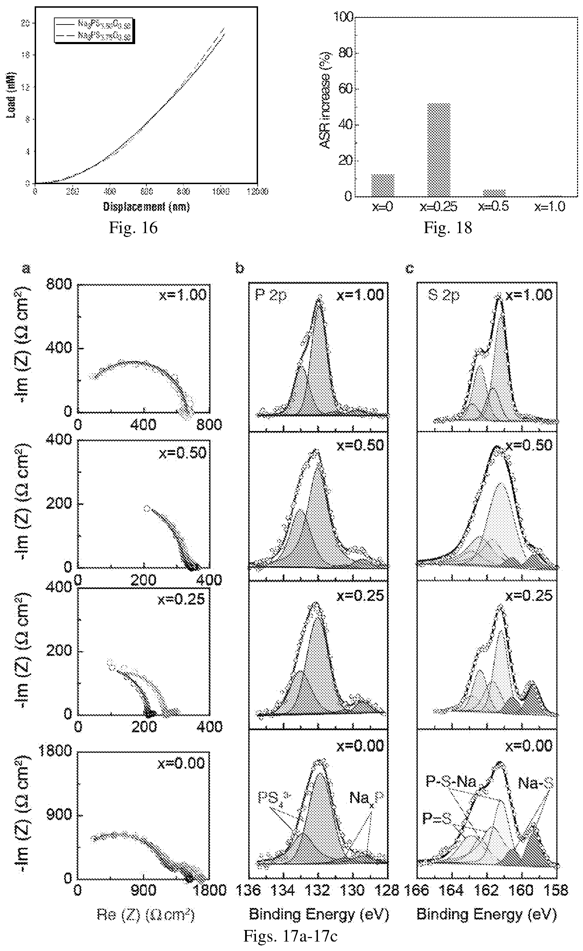

To quantify the mechanical properties of SEs, two critical parameters: Young's elastic modulus *E* and hardness *H* were measured using our previously reported nano-indentation technique. Typical loading-displacement curves (Fig. 13b and Supplementary Fig. 16) show that the HT-Na₃PS₄ pellet experiences a sudden increase of indenter penetration during the loading process, which is not found in glassy Na₃PS₄₋ₓOₓ SEs. This is referred to a phenomenon called "pop-in" and is associated with crack generation. Further, benefiting from the homogeneous property of the glassy materials, the Na₃PS₄ₓOₓ SEs display very small standard deviations for *E* and *H* as seen in the bar chart shown in Fig. 13d. Moreover, the oxygen doping results in an increase of *E* and *H* of SEs, which supports the observation that oxygen doping produces more BO units in the glass network. The *E* and *H* of Na₃PS₃O glass were measured to be 20.9±0.7 GPa and 1.0±0.1 GPa, respectively, which are the highest among Na₃PS₄₋ₓOₓ SEs. In particular, they are superior to the hot-pressed Na-ion SEs (E: 19.2 GPa).

Assuming that Poisson's ratio v is ca. 0.3, the shear modulus *G* of Na₃PS₃O glass is ca. 8.0±0.3 GPa, which is sufficient to suppress dendritic penetration of Na metal as predicted by the Monroe and Newman criterion. Thus, the electrolyte can be described as a nearly flawless or defect-free glass.

### Chemically Stable SEs against Na Metal

As described above, the chemical and electrochemical stability of SEs against Na metal anode is critically important for developing high-performance SSMBs. The Na/Na₃PS₄₋ₓOₓ SE interface was examined by monitoring the EIS change of Na|Na₃PS₄₋ₓOₓ|Na symmetric cells before and after 5 hours of rest at 60 °C, as shown in Fig. 17a. From the fitting parameters shown in Table 3, it can be conclude that the added oxygen has a positive effect on improving the SEs' chemical stability against Na metal as the total area specific resistance (ASR) change becomes less significant when more oxygen is doped. FIG. 18 shows total area specific resistance (ASR) change of Na₃PS₄₋ₓOₓ (x=0, 0.25, 0.50, and 1.00) SEs when contact with Na metal. In particular, for the Na₃PS₃O SE, x =1, it present a negligible change of bulk resistance (R_{b}) and charge-transfer resistance (R_{ct}), suggesting a chemically stable interface between Na₃PS₃O and Na. In contrast, all other SEs display a R_{b}, R_{ct}, and particularly interfacial resistance Rᵢ varying with time, which is indicative of an unstable Na/SE interface.

**Table 3 | Fitting results of EIS spectra of Na|Na₃PS₄₋ₓOₓ (x=0.00, 0.25, 0.50, and 1.00) SEs|Na symmetric cells before and after resting for 5 h.**

| 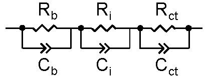 | | | | | | | |
|---|---|---|---|---|---|---|---|
| **x value** | **ASR (Ω·cm²)** | **R_{b} (Ω·cm²)** | **C_{b} (pF)** | **Rᵢ (Ω·cm²)** | **Cᵢ (µF)** | **R_{ct} (Ω·cm²)** | **C_{ct} (mF)** |
| 0.00 before | 1596.7 | 1240 | 1.20 | 272 | 0.16 | 84.7 | 9.90 |
| 0.00 after | 1753.0 | 1350 | 2.90 | 304 | 0.19 | 99.0 | 6.30 |
| 0.25 before | 253.1 | 216 | 0.24 | 6.0 | 4.50 | 31.1 | 53.0 |
| 0.25 after | 341.7 | 254 | 0.58 | 16.5 | 0.32 | 71.2 | 1.53 |
| 0.50 before | 367.17 | 334 | 0.24 | 24.2 | 0.45 | 8.97 | 0.45 |
| 0.50 after | 376.7 | 332 | 0.13 | 28.3 | 1.20 | 16.4 | 3.30 |
| 1.00 before | 664.9 | 644 | 0.79 | - | - | 20.9 | 1.30 |
| 1.00 after | 662.2 | 640.8 | 0.89 | - | - | 21.4 | 1.60 |

The obtained EIS spectra from high frequency to middle frequency to low frequency can be fitted into: the bulk resistance and capacitance (R_{b} + R_{gb}, C_{b} + C_{gb}) of the SEs, the interfacial resistance and capacitance (Rᵢ, Cᵢ) between Na and SEs with the characteristic capacitance of 10⁻⁶~10⁻⁷ F, and the charge-transfer resistance and capacitance (R_{ct}, C_{ct}). It is noteworthy of pointing out that the R_{ct} and Rᵢ includes the resistance at two Na|SE interfaces.

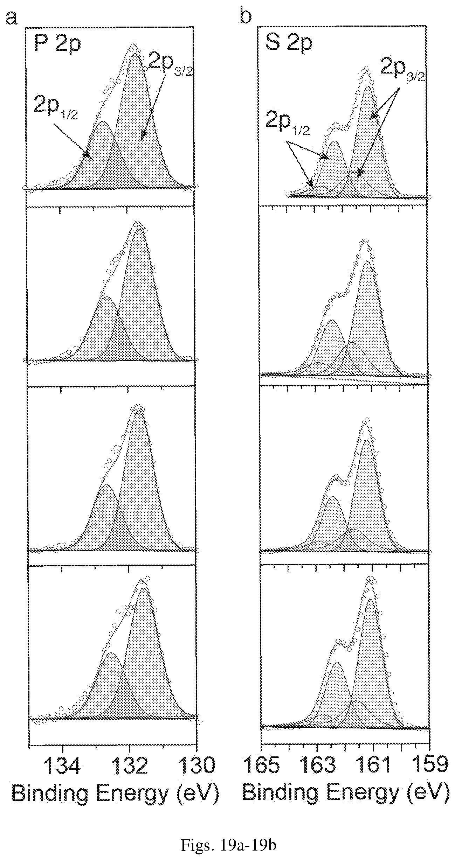

To identify the solid electrolyte interphase (SEI) composition that apparently grows with time for the x ≠ 1 glassy SEs, Na metal was detached from the symmetric cells and the surface of SEs was probed by the XPS. Compared to the XPS spectra of the pristine SEs (Figs. 19a-19b shows P 2p and S 2p orbitals XPS spectra of Na₃PS₄₋ₓOₓ (x=0, 0.25, 0.50, and 1.00) SEs), the P 2p spectra (Fig. 17b) and S 2p spectra (Fig. 17c) show that the Na₃PS₄₋ₓOₓ (x = 0.00, 0.25, and 0.50) SEs exhibit two new pairs of doublets at lower bonding energy after contacting with Na metal, indicating that these electrolytes have been reduced by Na metal to the reduced phosphide (NaₓP) and sulfide species (Na₂S), the former of which is a mixed conductor that can cause continuous reduction of the electrolyte. Thus, for these SEs an unstable SEI grows between the Na anode and SE, impeding the Na stripping/plating process. In contrast, the XPS signals from these reduced species are nearly indiscernible for Na₃PS₃O SE, validating the negligible ASR increase from EIS measurement. This is the first sulfide-based SE that forms a stable non-reacting SEI against Na metal. It is believed that the outstanding chemical stability of Na₃PS₃O in contact with Na metal is contributed by: first, as described above, Na₃PS₃O has a more interconnected and robust glass network than the other SEs due to the existence of more BO units, which have higher electronic binding energies than pure sulfide units and are more difficult to be reduced; second, the terminal oxygen in P-O⁻ units may react with Na metal and form an electronically insulating stable interphase (NaₓO).

### Electrochemically Stable and Highly Na⁺-Ion Conductive Tri-Layer Composite SEs

Fig. 20a shows the temperature-dependence of the Na-ion conductivities that were obtained from the Nyquist plots (Figs. 21a-21b show (a) Electrochemical impedance spectra (EIS) of Na₃PS₄₋ₓOₓ (x=0, 0.25, 0.50, and 1.00) SEs at 60 °C. (b) Plots of activation energies (Ea) and conductivities at 60 °C versus oxygen contents in Na₃PS₄₋ₓOₓ SEs) for the Na₃PS₄₋ₓOₓ, x = 0, 0.25, 0.50, 1.00, SEs. From Fig. 21b, it is intriguing that the ionic conductivities exhibit a 6-fold increase with the initial addition of oxygen, x = 0.25, rendering the conductivity of the Na₃PS_{3.75}O_{0.25} SE as high as 2.7×10⁻⁴ S cm⁻¹ and activation energy as low as 41.5 kJ mol⁻¹. This anomalous increase in the ionic conductivity may be associated with two distinctly different effects: one is an increase of the 'doorway' radius as observed in our previously studied Li₂GeS₂₋ₓOₓ glassy SE; the other is the existence of highly conductive *t*-Na₃PS₄ crystalline phase (Fig. 10a). Further additions of oxygen monotonically decrease the SEs' conductivities. It is attributed to that the SEs with higher oxygen addition have more compact glass network that decreases the free volume available for Na⁺ ions transport. As a result, the conductivity of Na₃PS₃O SE is relatively lower, however, possesses an appreciable value of 8.2×10⁻⁵ S cm⁻¹ at 60 °C.

The superb formability of the Na₃PS₃O SE can provide access to fabricate a thin SE layer, the resistance of which could be very low. An ideal SE for SSMBs requires both high ionic conductivity and excellent mechanical and chemical stability. To create such an SE, therefore, a tri-layer architecture with the most ionically conductive Na₃PS_{3.75}O_{0.25} in the middle and the most mechanically and chemically stable Na₃PS₃O in the outside is designed and shown in the inset of Fig. 20b. From the SEM image (inset of Fig. 20b), an entirely all-glass SE separator without any discernible grain boundaries and interfaces was attained owing to the excellent formability and densification of both the Na₃PS₃O and Na₃PS_{3.75}O_{0.25} SEs. Cyclic voltammetry curve of the tri-alyer SE-based asymmetric cell Na|trilayer SE|SS, where SS is stainless steel, exhibits a pair of well-defined Na oxidation and reduction peaks at ~0 V and no remarkable oxidation currents up to 3 V versus Na⁺/Na (Fig. 20b). Both of these results indicate the applicability of the tri-layer electrolyte in SSMBs and in particular, the applicability of operating in an ambient-temperature Na-S battery.

Before fabricating a full cell, however, the cyclability of the tri-layer SE was studied in a symmetric Naltri-layer SE|Na cell using gradient-current and constant-current tests, as shown in Fig. 20c and Fig. 20d, respectively. As seen in Fig. 20c, the voltage profile of the tri-layer separator shows an ohmic response, V = IR, at low current densities < 2 mA cm⁻², however, an obvious voltage drop occurs when the current exceeds 2.3 mA cm⁻², which is determined to be the critical current density (CCD) for the tri-layer SE. Although the Na₃PS₃O SE shows lower ionic conductivities and mechanical modulus than Li-based sulfide and even oxide SEs (Ref), the CCD of 2.3 mA cm⁻² is comparable to the state-of-the-art CCD results, see Table 4. The increased capability of the oxysulfide glassy SEs to resist Na dendrite is attributed to their homogeneous and near flawless structure and robust mechanical properties. These observations agree with others on the failure mechanisms of SEs towards a metal anode where they observed that Griffith's flaws (pores, grain boundaries and etc.) in the SEs drive dendritic growth and penetration through SEs.

**Table 4 | Comparison of reported critical current densities (CCD) of SEs with that of Na₃PS₃O SE developed our work**

| **Electrolyte** | **Special treatment** | **Electrolyte status** | **Test temperature (°C)** | **Critical current density (mA/cm²)** | **Ref.** |
|---|---|---|---|---|---|
| Li₇La₃Zr₂O₁₂:Ta | Hot-pressing sintering | Ceramic | 50 | 0.8 | 1 |
| Li₇La₃Zr₂O₁₂:Al | Controlling surface with small grains | Ceramic | RT | 0.134 | 2 |
| Li₇La₃Zr₂O₁₂:Al | Hot-pressed sintering and surface wet-polished | Ceramic | RT | 0.3 | 3 |
| 75Li₂S-25P₂S₅ | Cold-pressed | Glass | RT | 0.5 | 4 |
| 75Li₂S-25P₂S₅ | Hot-pressed at 170 °C | Glass | RT | 1.0 | 4 |
| 75Li₂S-25P₂S₅ | Hot-pressed at 300 °C | Glass-ceramic | RT | 0.1 | 4 |
| 70(75Li₂S-25P₂S₅)-30LiI | Cold-pressed | Glass | RT | 1.0 | 5 |
| 70(75Li₂S-25P₂S₅)-30LiI | Cold-pressed | Glass | 60 | 2.16 | 5 |
| **Na₃PS₃O** | **Cold-pressed** | **Glass** | **60** | **2.3** | **This work** |

In the constant-current mode, Fig. 20d and Fig. 20e show that symmetric cells with the same tri-layer SE can stably cycle for several hundred hours without short-circuiting at current densities of 0.2 mA cm⁻² and 0.5 mA cm⁻², respectively. Furthermore, the insets of Figs. 20d and 20e show that very flat voltage profiles are observed at each cycle. This behavior indicates that the Na plating/stripping processes are very fast at the Na/Na₃PS₃O interface. This is consistent with the small charge-transfer resistance of Na/Na₃PS₃O, which is only 20.9 Ω·cm² (for one side, it is 10.45 Ω·cm², Table 3). Fig. 22 gives the comparison between our current work and the reported Na|SEs|Na symmetric cells using different categories of SEs. It is clear that the tri-layer oxysulfide SE developed in this work significantly extends the cycle time and current density performance for SEs in symmetric cells, setting new standards for the state of the art in current density and cycling time.

It has been shown above that the Na₃PS₃O SE can be combined with Na₃PS_{3.75}O_{0.25} to create a stable all-glass separator. In a similar way, using the tri-layer architecture, Na₃PS₃O can be used for protecting other highly conducting but chemically unstable (vs. Na metal) SEs such as glass-ceramics, *e.g.* HT-Na₃PS₄, or ceramics, *e.g.* Na₃SbS₄, SEs. An example of this is shown in Figs. 23a-23e for a trilayer SE of Na₃PS₃O|HT-Na₃PS₄|Na₃PS₃O. As expected, the correlated symmetric cell also shows very stable Na plating/stripping voltage profiles at 0.2 mA cm⁻² for up to 500 h.

### An Ambient-temperature All-solid-state Na-S Full Cells

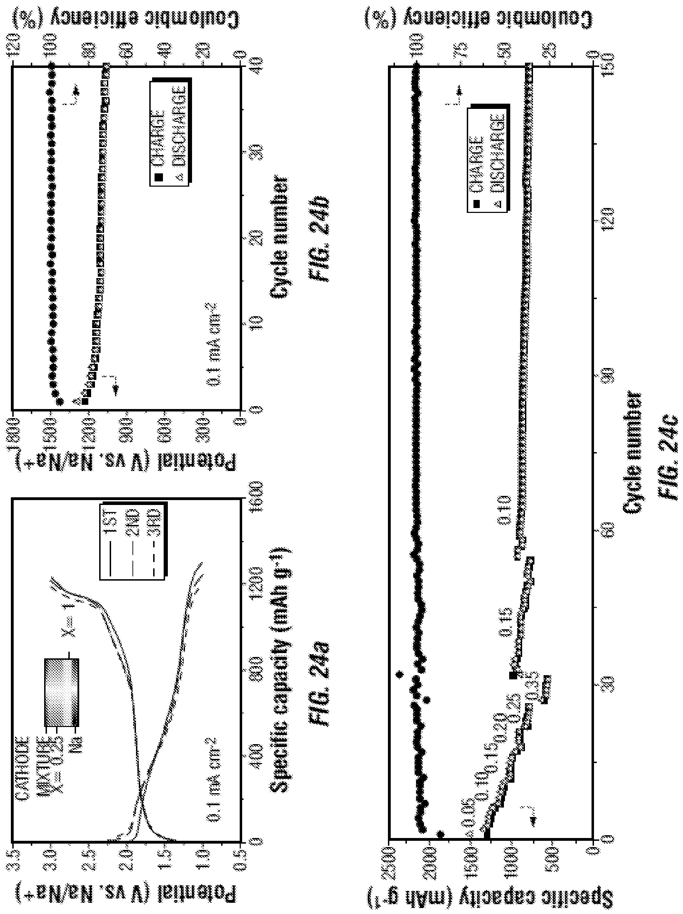

The excellent Na-Na₃PS₃O stability enables the fabrication of SSMBs, of which the one of the most promising is the ambient-temperature Na-S battery with very low cost and high specific energy. On the basis of the above study of tri-layer SEs, a Na-S battery having the architecture of S-Na₃PS_{3.75}O_{0.25}|Na₃PS_{3.75}O_{0.25}|Na₃PS₃O|Na was designed and tested at 60 °C. Fig. 24a shows that the cell can deliver a high initial discharge capacity of 1297 mAh g⁻¹, which is 77% of the theoretical capacity of sulfur (Na→Na₂S: 1675 mAh g⁻¹) and especially much higher than that, 558 mAh g⁻¹, of the conventional high-temperature Na-S battery with liquid Na and S electrodes and the discharge limitation of Na→Na₂S₄. The 1^{st} cycle coulombic efficiency is 92%, indicating that the polysulfide shuttling effect commonly found in a liquid electrolyte-based cell has been prevented in the current system. After 40 cycles, the battery delivers a capacity of 1070 mAh g⁻¹ with capacity retention of 83%, see Fig. 24b. These values are significantly better than those of the reported Na-S batteries using oxide or polymer SEs as shown in Table 5. The discharging voltage profile shows two plateaus located at 1.9 V and 1.25 V vs. Na/Na⁺ with a single slope in between. The average discharging potential is 1.42 V, which is higher than those of other pure sulfide SE-based Na-S batteries that use a NaSn alloy as the anode (Table 5). Therefore, the oxysulfide-based Na metal-sulfur battery system described here is able to provide the highest specific energy density, 1819 Wh kg⁻¹, among all currently reported solid-state Na battery systems. Further, the cell presents good rate capability of delivering specific capacities of 908 and 574 mAh g⁻¹ at 0.20 and 0.35 mA cm⁻², respectively (Fig. 25), and stable cycling up to 150 cycles at 0.10 mA cm⁻² (Fig. 24c). The significantly improved performances of our Na-S battery is attributed to the excellent stability of Na₃PS₃O towards Na anode, which renders Na metal stable plating/stripping at high rates, and the superior formability of Na₃PS_{3.75}O_{0.25}, which ensures the consistently good contact with sulfur during cycling. For these reasons, we believe these new oxysulfide SEs may offer an entirely new and successful approach to the development of low cost, high energy density, high safety, and long cycle life Na-based SSMBs.

**Table 5 | Comparison of reported Na-S batteries using SEs with our work**

| **Electrolyte separator** | **Cathode** | **Anode** | **Discharge voltage (V)** | **1^{st} cycle capacity (mAh/ g)** | **Specific energy (Wh/k g)** | **Cycling life** | **Ref •** |
|---|---|---|---|---|---|---|---|
| Na_{3.1}Zr_{1.95}Mg_{0.05}Si₂ PO₁₂ | S | Na | 1.75 | 527 | 922 | 10 | 9 |
| Poly (ethylene oxide) (PEO) | S | Na | 1.75 | 505 | 884 | 10 | 14 |
| β"-Al₂O₃ | S | Na | 1.73 | 836 | 1446 | 100 | 15 |
| Na₃PS₄ (RT) | S | NaSn | 1.10 | 1522 | 1674 | 2 | 16 |
| Na₃PS₄ (RT) | S | NaSn | 1.30 | 1112 | 1446 | 25 | 17 |
| Na₃PS₄ (60 °C) | Na₂S | NaSn | 1.25 | 1050 | 1312 | 50 | 18 |
| Na₃PS₄ (60 °C) | Na₂S | NaSn | 1.25 | >800 | ~1000 | 50 | 19 |
| Na₃PS_{3.75}O_{0.25}/Na₃ PS₃O (60 °C) | S | Na | 1.42 | 1281 | 1819 | 150 | Our wor k |

### Conclusions

A new class of oxysulfide glass SEs with combined advantages of sulfide SEs and oxide SEs was successfully synthesized and systematically investigated in both symmetric and full cell configurations. Compared with pure sulfide SEs, oxygen-doped Na₃PS₄₋ₓOₓ oxysulfide SEs show much stronger and denser glass networks due to the formation of more oxide and oxysulfide units with BO characteristics. The addition of oxygen also causes these oxysulfide SEs to exhibit the never before seen capability of pressure-induced homogenization of the glassy powder starting materials into continuous near flawless glass microstructure. This dramatically improved formability causes the as-formed homogeneous oxysulfide SEs to have significantly higher mechanical strength and dramatically higher chemical stability towards Na metal. A near flawless tri-layer composite SE with Na₃PS₃O|Na₃PS_{3.75}O_{0.25}|Na₃PS₃O can not only demonstrate a record critical current density of up to 2.3 mA cm⁻² and for a cycling life of up to 500 h among the reported Na metal symmetric cell, but also enable an ambient-temperature Na-S cell to deliver the highest energy density among all known solid-state Na systems to date. These new oxysulfide SEs and the tri-layer composite SEs may provide a very promising avenue of research towards the development of new high energy, safe, low cost and long cycle life Na metal anode-based SSMBs in general and new solid-state Na-S batteries for energy storage devices.

### Methods

**Synthesis of Na₃PS₄₋ₓOₓ SEs.** Na₂S, P₂S₅, and P₂O₅ (Sigma-Aldrich, 99%) were used as the raw materials without further purification. The Na₃PS₄₋ₓOₓ (x=0.00, 0.25, 0.50 and 1.00) SEs were prepared by high-energy MCM technique. Typically, 2 g mixtures of appropriate amounts of Na₂S, P₂S₅, and P₂O₅ powders were milled in an argon-protected stainless steel jar containing stainless steel milling balls at 500 rpm for 3 h to obtain the glassy SEs. The Na₃PS₄ glass-ceramic SE, namely HT-Na₃PS₄, was obtained by heating the glassy Na₃PS₄ (x=0.00) under vacuum at 260 °C for 2 h.

**Materials characterizations of Na₃PS₄₋ₓOₓ SEs** Since Na₃PS₄₋ₓOₓ SEs are sensitive to air and moisture, all of the characterizations were conducted under argon protection. Lab-based X-ray diffraction (XRD) and synchrotron XRD patterns were collected using a Rigaku MiniFlex 600 with Cu Kα radiation (λ = 1.5418 Å) and Beamline 11-ID-C at Advanced Photon Source with an X-ray wavelength of 0.1173 Å, respectively, to determine the amorphization of raw materials and the possible crystalline phases of Na₃PS₄₋ₓOₓ products. The thermal behavior of the SEs powders was examined using differential scanning calorimetry, DSC, TA Instruments Q2000, using nitrogen as the carrier gas. The sample was placed in the Tzero aluminum pan and hermetically crimp-sealed inside the argon-filled glove box. The DSC measurements were carried out at a heating rate of 20°C min⁻¹ from 50 °C to 400°C. A Renishaw inVia Raman spectrometer employing a 488 nm Ar⁺ laser and 10 mW of power was used to collect the Raman spectra from 200 to 700 cm⁻¹. SE powders were placed into a small plastic sample holder inside the glove box and covered with transparent tape to prevent exposure to air during data collection. Infrared (IR) spectra were acquired on a Bruker IFS 66 v/s vacuum IR spectrometer in the range of 400-1200 cm⁻¹ using a KBr beamsplitter. During the test, the spectrometer optical bench was held under vacuum to protect the samples from moisture and air. The IR spectra of the samples were taken by diluting the finely ground glass and glass-ceramic powders to ~2 wt% in finely ground and carefully dried CsI powders and then pressed into small pellets. P Solid-state Magic Angle Spinning Nuclear Magnetic Resonance (MAS NMR) spectra were collected using a JEOL ECA-500 NMR spectrometer. SE powders were packed into an alumina spinner with a sealant in an argon-filled glove box. Spectra were collected using a 4.25 µs, 60° pulse length, and a 200 s recycle delay with the spinning speed of 20 kHz. Chemical shifts were externally referenced to NaH₂PO₄. The elastic modulus *E* and hardness *H* were measured using the same method as reported. Briefly, *E* and *H* values were measured using a G200 Keysight nanoindenter with a Berkovich indenter using the Oliver-Pharr method on samples inside an argon-filled glove box to avoid the moisture and air contaminations. Indentations with a maximum indentation load of 1 mN were pressed on different spots of the SE surfaces to ensure the convergence of the measured results. The loading-displacement curves were recorded during the tests. Morphologies of the SEs powders, as well as the surface and cross-section of the densified pellets, were observed using a Gemini LEO 1525 scanning electron microscope (SEM). Nanocrystals embedded in the glassy SE were confirmed using a JEOL 2100F transmission electron microscope (TEM). The X-ray photoelectron spectroscopy (XPS) spectra were collected using a Physical Electronics PHI 5700 on the SEs pellets before and after contacting with Na metal using a monochromatic Mg Kα X-ray source. The XPS signals were corrected relative to the C 1s signal (284.8 eV) and fitted using the XPSPEAK41 software.

**Electrochemical characterizations of SEs** The temperature-dependent ionic conductivities of the pelletized SEs were measured from 25 °C to 90 °C using electrochemical impedance spectroscopy (EIS, frequency: 1 MHz-0.1 Hz, amplitude: 5 mV) on a VMP3, BioLogic Co. electrochemical workstation. Before the measurement, the SEs powders were cold-pressed in a polyetherether-ketone (PEEK) test cell die (φ = 13 mm) under a pressure of 450 MPa and then co-pressed with 20 mg nano-copper powders (Sigma-Aldrich, 40-60 nm, ≥99.5%) as the electrodes under a pressure of 200 MPa. Chemical stability of the SEs towards Na metal was studied by monitoring the impedance change vs. rest time of the symmetric cell Na|SEs|Na, which was assembled by attaching two same pieces of Na metal foils (~100 µm in thickness) on both sides of the SEs. Cyclic voltammetry of the stainless steel|tri-layer SEs|Na asymmetric cell was carried out using a scanning rate of 0.05 mV/s in a potential range of -0.3 V to +3.0 V. Galvanostatic cycling of Naltri-layer SEs|Na symmetric cells was conducted at 0.2 mA cm⁻² and 0.5 mA cm⁻². For the fabrication of tri-layer electrolytes, first, ~150 mg of Na₃PS_{3.75}O_{0.25} glass or Na₃PS₄ glass-ceramic SE powders were cold-pressed at 75 MPa; then ~25 mg of Na₃PS₃O glass powders were evenly distributed on both sides of as-pressed Na₃PS_{3.75}O_{0.25} glass or Na₃PS₄ glass ceramic pellet; finally the three layers were co-pressed at 450 MPa and attached with Na metal or stainless steel foils.

**Electrochemical characterizations of Na-S full cells** Since Na₃PS_{3.75}O_{0.25} is the most conductive among the Na₃PS₄₋ₓOₓ SEs and Ketjen black (EC-600JD, AkzoNobel) has a high surface area of 1400 m² g⁻¹, they were chosen to blend with sulfur to create both fast ionic and electronic pathways for the sulfur active material in the composite cathode. In detail, sulfur (99.5%, Alfa Aesar) and Ketjen black (EC-600JD, AkzoNobel) powders with a weight ratio of 1:1 were ball-milled in an agate jar at a rotation speed of 500 rpm for 20 h to obtain a sulfur/Ketjen black nanocomposite, which was then milled with Na₃PS_{3.75}O_{0.25} electrolyte powders at a rotation speed of 350 rpm for 30 min. The weight ratio of sulfur: Ketjen black: Na₃PS_{3.75}O_{0.25} composite cathode is 2:2:6. To fabricate a Na-S battery, ~150 mg Na₃PS_{3.75}O_{0.25} electrolyte powders were firstly pressed at 75 MPa into a pellet, of which both sides were then uniformly covered with 20~25 mg Na₃PS₃O electrolyte powders and ~2 mg composite cathode powders. The tri-layer was finally co-pressed at 450 MPa and attached with a piece of Na metal foil onto the Na₃PS₃O electrolyte side. Galvanostatic tests of the as-fabricated full cells were performed in the potential range of 1.0 to 3.0 V vs. Na/Na⁺ at different current densities from 0.05 to 0.35 mA cm⁻². All the electrochemical tests were conducted at 60 °C.

## Claims

1. A battery comprising:
at least one sodium metal or sodium-based alloy electrode;
a second electrode; and
a solid-state electrolyte, wherein the electrolyte comprises a sodium oxy-sulfide glass, and wherein the sodium oxy-sulfide glass is Na₃PS₄₋ₓOₓ with 0<x≤1.

2. The battery of claim 1, wherein x=0.25, 0.5, or 1.00.

3. The battery of claim 1, wherein a relative density of the sodium oxy-sulfide glass is 95% or greater.

4. The battery of claim 1, wherein the electrolyte further comprises other sulfide materials, and the other sulfide materials are sandwiched between the sodium oxy-sulfide glass.

5. A method for forming an electrolyte comprising:
ball-milling starting materials comprising at least one sodium sulfide material and at least one oxide material; and
pressing resulting ball-milled materials to form a sodium oxy-sulfide glass that is a solid-state electrolyte, wherein the sodium oxy-sulfide glass is Na₃PS₄₋ₓOₓ with 0<x≤1.

6. The method of claim 5, wherein the starting materials are Na₂S, P₂S₅, and P₂O₅ mixed with a molar ratio of 75:(25-y):y where y ≠ 0;
optionally wherein 0<y≤20.

7. The method of claim 5, wherein x=0.25, 0.5, or 1.00.

8. The method of any of claim 5, wherein the pressing step is performed at 100 °C or less.

9. The method of claim 5, wherein the pressing step is performed at a pressure between 100-450 MPa.

10. The method of claim 5, wherein a relative density of the solid-state electrolyte is 95% or greater.

11. The method of claim 5, wherein the ball milling step is performed at 500 rpm or greater.

## Patentansprüche

1. Batterie, umfassend:
zumindest eine Natriummetall- oder natriumbasierte Legierungselektrode;
eine zweite Elektrode; und
einen Festkörperelektrolyten, wobei der Elektrolyt ein Natriumoxysulfidglas umfasst und wobei das Natriumoxysulfidglas Na₃PS₄₋ₓOₓ mit 0<x≤1 ist.

2. Batterie nach Anspruch 1, wobei x=0,25, 0,5 oder 1,00.

3. Batterie nach Anspruch 1, wobei eine relative Dichte des Natriumoxysulfidglases 95 % oder mehr ist.

4. Batterie nach Anspruch 1, wobei der Elektrolyt ferner andere Sulfidmaterialien umfasst und die anderen Sulfidmaterialien zwischen dem Natriumoxysulfidglas eingefügt sind.

5. Verfahren zum Bilden eines Elektrolyten, umfassend:
Kugelmahlen von Ausgangsmaterialien, die zumindest ein Natriumsulfidmaterial und zumindest ein Oxidmaterial umfassen; und
Pressen von resultierenden kugelgemahlenen Materialien, um ein Natriumoxysulfidglas zu bilden, das ein Festkörperelektrolyt ist, wobei das Natriumoxysulfidglas Na₃PS₄₋ₓOₓ mit 0<x≤1 ist.

6. Verfahren nach Anspruch 5, wobei die Ausgangsmaterialien Na₂S, P₂S₅ und P₂O₅ gemischt mit einem Molverhältnis von 75:(25-y):y sind, wobei y ≠ 0;
wobei optional 0<y≤20.

7. Verfahren nach Anspruch 5, wobei x=0,25, 0,5 oder 1,00.

8. Verfahren nach Anspruch 5, wobei der Pressschritt bei 100 °C oder weniger durchgeführt wird.

9. Verfahren nach Anspruch 5, wobei der Pressschritt bei einem Druck zwischen 100-450 MPa durchgeführt wird.

10. Verfahren nach Anspruch 5, wobei eine relative Dichte des Festkörperelektrolyten 95 % oder mehr ist.

11. Verfahren nach Anspruch 5, wobei der Kugelmahlschritt bei 500 U/min oder mehr durchgeführt wird.

## Revendications

1. Batterie comprenant :
au moins une électrode de métal sodique ou d'alliage à base de sodium ;
une seconde électrode ; et
un électrolyte à l'état solide, dans laquelle l'électrolyte comprend un verre d'oxysulfure de sodium, et dans laquelle le verre d'oxysulfure de sodium est Na₃PS₄₋ₓOₓ avec 0<x≤1.

2. Batterie de la revendication 1, dans laquelle x=0,25, 0,5 ou 1,00.

3. Batterie de la revendication 1, dans laquelle une densité relative du verre d'oxysulfure de sodium est supérieure ou égale à 95 %.

4. Batterie de la revendication 1, dans laquelle l'électrolyte comprend en outre d'autres matériaux de sulfure, et les autres matériaux de sulfure sont pris en tenaille entre le verre d'oxysulfure de sodium.

5. Procédé permettant la formation d'un électrolyte comprenant :
le broyage à billes de matériaux de départ comprenant au moins un matériau de sulfure de sodium et au moins un matériau d'oxyde ; et
le pressage de matériaux broyés à billes résultants pour former un verre d'oxysulfure de sodium qui est un électrolyte à l'état solide, dans lequel le verre d'oxysulfure de sodium est Na₃PS₄₋ₓOₓ avec 0<x≤1.

6. Procédé de la revendication 5, dans lequel les matériaux de départ sont Na₂S, P₂S₅, et P₂O₅ mélangés avec un rapport molaire de 75:(25-y):y où y ≠ 0 ;
dans lequel éventuellement 0<y≤20.

7. Procédé de la revendication 5, dans lequel x=0,25, 0,5 ou 1,00.

8. Procédé de la revendication 5, dans lequel l'étape de pressage est effectuée à 100 °C ou moins.

9. Procédé de la revendication 5, dans lequel l'étape de pressage est effectuée à une pression située entre 100 et 450 MPa.

10. Procédé de la revendication 5, dans lequel une densité relative de l'électrolyte à l'état solide est supérieure ou égale à 95 %.

11. Procédé de la revendication 5, dans lequel l'étape de broyage à billes est effectuée à 500 tr/min ou plus.
